# EUROPEAN PATENT APPLICATION

(11) **EP 3 648 310 A1**
(43) Date of publication of application: **06.05.2020**
(21) Application number: 19205431.0
(22) Date of filing: 25.10.2019
(51) Int. Cl.: H02K 1/27, H02K 1/06

(54) **ROTOR AND IPM MOTOR USING SAME**

(30) Priority: 30.10.2018 JP 2018203576; 04.09.2019 JP 2019161124
(71) Applicant: Valeo Japan Co., Ltd., Kumagaya-shi, Saitama 360-0193 (JP)
(72) Inventor: MIYAMAE, Shinsuke, SAITAMA, 360-0193 (JP); TSUKAGOSHI, Sadamitsu, SAITAMA, 360-0193 (JP); OKAKURA, Hiroaki, SAITAMA, 360-0193 (JP); KHANCHOUL, Mohamed, 78320 LE MESNIL SAINT-DENIS (FR)
(74) Representative: Tran, Chi-Hai

(57) **Abstract**

In a rotor 3 wherein a magnet disposition region 19 is provided close to the outer periphery of a rotor core 8 having in the center thereof a shaft hole 16, wherein a plurality of main magnet holding portions 17, which are disposed along the circumferential direction of the rotor core, and a plurality of auxiliary magnet holding portions 18, which are disposed one between each adjacent pair of the plurality of main magnet holding portions and along the radial direction of the rotor core, are provided in the magnet disposition region, and wherein main magnets 11, the magnetic pole direction of which conforms to the radial direction of the rotor core, are fitted in the respective main magnet holding portions, and auxiliary magnets 12, the magnetic pole direction of which conforms to the circumferential direction of the rotor core, are fitted in the respective auxiliary magnet holding portions, voids 20 are extended, parallel to the shaft hole 16, between the magnet disposition region 19 and shaft hole 16 of the rotor core 8 and inside the respective auxiliary magnet holding portions 18.

## Description

### BACKGROUND OF THE INVENTION

### 1. Field of the Invention

The present invention relates to a permanent magnet embedded rotor and an IPM motor using the rotor, and particularly, to a rotor, which can reduce magnetic fluxes leaking radially inwardly of permanent magnets and thus improve magnetic properties, and an IPM motor using the rotor.

### 2. Description of the Related Art

In an electric motor of inner rotor structure, a technology is known in which, in order to generate high magnetic fields outside a magnet array and reduce cogging torque and torque ripple, a rotor includes a plurality of main magnets magnetized in a radial direction of the rotor and a plurality of auxiliary magnets magnetized in a direction other than the radial direction (for example, in a circumferential direction), wherein the main magnets are disposed, at spaced intervals, in the circumferential direction of the outer periphery of a rotor core, and the auxiliary magnets are disposed one between each adjacent pair of the main magnets, thus putting the main and auxiliary magnets in a Halbach array (refer to Patent Literature 1 and 2) .

It is possible, by adopting this kind of magnet array, to form a high-torque, highly efficient electric motor, but when adopting an SPM structure in which a plurality of main magnets and a plurality of auxiliary magnets are arrayed on the outer periphery of a rotor core, the process of joining the main and auxiliary magnets to the outer periphery of the rotor core with an adhesive or the like is required, and there arises a concern about the inconvenience of a decrease in magnetic properties due to an occurrence of cracking, chipping, or shattering of the magnets.

Therefore, it is under consideration to adopt an IPM structure in which the magnets are embedded in a rotor while applying the Halbach array of the magnets (refer to Patent Literature 3 and 4)
Patent Literature 1: JP-A-2002-354721
Patent Literature 2: JP-A-2007-014110
Patent Literature 3: JP-A-2012-50179
Patent Literature 4: JP-A-2014-150659

When adopting the IPM structure, however, when the diameter of a rotary shaft is small, the distance between the main and auxiliary magnets and a shaft hole in which to mount the rotary shaft increases, so that a region which can serve as magnetic paths is formed to be large in area between the magnets and the shaft hole.

For this reason, even when the magnets are disposed by applying the Halbach array, partial magnetic fluxes still leak axially inwardly (to the shaft hole side) of the magnet array, causing the inconvenience of reducing the magnetic properties.

### SUMMARY OF THE INVENTION

The invention, having been contrived in light of such circumstances, has for its principal object to provide a rotor wherein when embedding permanent magnets inside a rotor core by applying a Halbach array, it is possible, even when there is a space between a shaft hole into which to insert a rotary shaft and the magnets, to reduce magnetic fluxes leaking inwardly of the magnet array and thus improve magnetic properties, and an IPM motor using the rotor.

In order to achieve the object, the rotor according to the invention is a rotor, used for a motor of inner rotor structure, which includes a cylindrical rotor core and a plurality of permanent magnets disposed inside the rotor core. The rotor is characterized as follows. A shaft hole is formed in the center of the rotor core so as to penetrate through the rotor core, and a magnet disposition region in which are disposed the plurality of permanent magnets is provided in an outer peripheral side region of the rotor core. A plurality of main magnet holding portions, which are extended parallel to the shaft hole, and the long sides of the rectangular sections of which are disposed along the circumferential direction of the rotor core, and a plurality of auxiliary magnet holding portions, which are extended parallel to the shaft hole and disposed one between each adjacent pair of the plurality of main magnet holding portions, and the long sides of the rectangular sections of which are disposed along the radial direction of the rotor core, are formed in the magnet disposition region of the rotor core. The permanent magnets include main magnets, which are fitted in the respective main magnet holding portions so that the magnet pole direction of the main magnets conforms to the radial direction of the rotor core, and auxiliary magnets which are fitted in the respective auxiliary magnet holding portions so that the magnet pole direction of the auxiliary magnets conforms to the circumferential direction of the rotor core. A plurality of voids extended parallel to the shaft hole are provided between the magnet disposition region and the shaft hole, and the voids are disposed radially inside the respective auxiliary magnet holding portions.

Consequently, the voids are formed radially inside (on the shaft hole side) of the auxiliary magnet holding portions radially formed around the shaft hole, so that the magnetic paths between the magnets and the shaft hole are blocked by the voids, and it is possible to reduce magnetic fluxes leaking radially inward from the main and auxiliary magnets.

Also, the rotor is characterized in that a circular hub portion formed around the shaft hole and the magnet disposition region are connected by connecting portions formed one between each adjacent pair of the voids, and that the connecting portions are provided radially inside the respective main magnet holding portions.

A configuration is such that, by providing the voids, between the respective auxiliary magnet holding portions and the shaft hole, inside the respective auxiliary magnet holding portions, the connecting portions are provided one between each adjacent pair of the voids, and the connecting portions are provided radially inside of the respective main magnet holding portions, so that it is possible to provide the number of connecting portions corresponding to the number of main magnets all around at regular intervals, and thus possible to successfully keep a balance in deformation of the rotor core.

It is preferable here that the circumferential width of the connecting portions in the vicinity of the respective main magnet holding portions is made larger than the circumferential width thereof in the vicinity of the shaft hole.

By adopting this kind of configuration, it is possible to alleviate a stress concentration on the connecting portions due to a centrifugal force, and it is possible, when configuring the rotor core by laminating a large number of steel plates, that a caulked portion wherein adjacent steel plates are joined to each other is provided in a portion of each of the connecting portions in the vicinity of each respective main magnet holding portion.

When the caulked portions wherein adjacent steel plates are joined to each other are provided radially outside the respective main magnet holding portions, the caulked portions are provided on magnetic paths on which magnetic fluxes concentrate, and there is an inconvenience of hindering magnetic flux flows, but when increasing the width of the portions of the connecting portions in the vicinity of the main magnet holding portions and providing the caulked portions in the widened portions, the magnetic fluxes are rarely hindered from flowing, and there is no inconvenience of reducing magnetic fluxes contributing to torque.

The voids each may have integrated therein a magnetic path blockage portion, which is provided in the vicinity of its respective auxiliary magnet holding portion and to which the function to block magnetic paths is imparted, and a weight reduction portion which is provided, continuous with the magnetic path blockage portion, on the shaft hole side and to which a weight reduction function is imparted. That is, in the event of blocking magnetic fluxes which flow between the main and auxiliary magnets and come around from radially inside, as heretofore described, it is sufficient to provide the voids only in the vicinity of the radial inside of the respective auxiliary magnet holding portions, but it is possible to achieve a reduction in the weight of the rotor by extending each void radially inward and thus integrating the weight reduction portion, as heretofore described.

The above rotor is useful when forming an IPM motor (magnet embedded motor) which has the rotor disposed inside a cylindrical stator having a stator core, which has a plurality of teeth, and windings wound one around each of the plurality of teeth.

As heretofore described, according to the invention, the rotor is as follows. The plurality of main magnet holding portions, which are disposed along the circumferential direction of the rotor core, and the plurality of auxiliary magnet holding portions, which are disposed, along the radial direction of the rotor core, one between each adjacent pair of the plurality of main magnet holding portions, are provided in the magnet disposition region provided close to the outer periphery of the rotor core having in the center thereof the shaft hole. The main magnets, the magnetic pole direction of which conforms to the radial direction of the rotor core, are fitted in the respective main magnet holding portions, and the auxiliary magnets, the magnetic pole direction of which conforms to the circumferential direction of the rotor core, are fitted in the respective auxiliary magnet holding portions . In the rotor, the voids are extended parallel to the shaft hole, between the magnet disposition region and the shaft hole and radially inside the respective auxiliary magnet holding portions, so that it is possible, even when the diameter of the rotary shaft is small (even when the distance between the shaft hole and the magnet holding portions is large), to reduce magnetic fluxes leaking radially inwardly of the magnet array and thus improve magnetic properties.

Also, the connecting portions extending radially from the hub portion formed around the shaft hole are provided, radially inside the respective main magnet holding portions, one between each adjacent pair of the voids, so that it is possible to successfully keep a balance in deformation of the rotor core.

Furthermore, the portions of the connecting portions in the vicinity of the respective main magnet holding portions are formed to be large in width, and the caulked portions wherein adjacent steel plates configuring the rotor core are joined to each other are provided in the respective widened portions, whereby it is possible to omit riveting laminated steel plates together, and the magnetic fluxes are not hindered from flowing, eliminating the inconvenience of reducing magnetic fluxes contributing to torque.

### BRIEF DESCRIPTION OF THE DRAWINGS

Figs. 1A and 1B are views showing an IPM motor according to the invention, wherein Fig. 1A is a sectional side view thereof, and Fig. 1B is an A-A sectional view of Fig. 1A.
Fig. 2 is a perspective view showing a rotor.
Fig. 3 is a perspective view showing a rotor core wherein magnets are fitted in their respective holding portions.
Fig. 4 is a view as seen in an axial direction of Fig. 3.
Fig. 5 is a partial enlarged view of Fig. 4.
Fig. 6 is a diagram explaining a magnetic flux distribution of the rotor of the invention.
Fig. 7 is a partial enlarged view showing another configuration example of the rotor.
Figs. 8A and 8B are views showing a caulked portion provided in steel plates configuring the rotor in the configuration example of Fig. 7, showing an example in which the caulked portion is configured by dowel caulking, wherein Fig. 8A is a view showing a condition in which steel plates are laminated by dowel caulking, and Fig. 8B is a perspective view showing a dowel.
Fig. 9 is a view showing another configuration example of voids provided in the rotor core.

### DESCRIPTION OF THE PREFERRED EMBODIMENTS

Hereinafter, a description will be given, while referring to the accompanying drawings, of an embodiment of an IPM motor (Interior Permanent Magnet Motor) according to the invention.

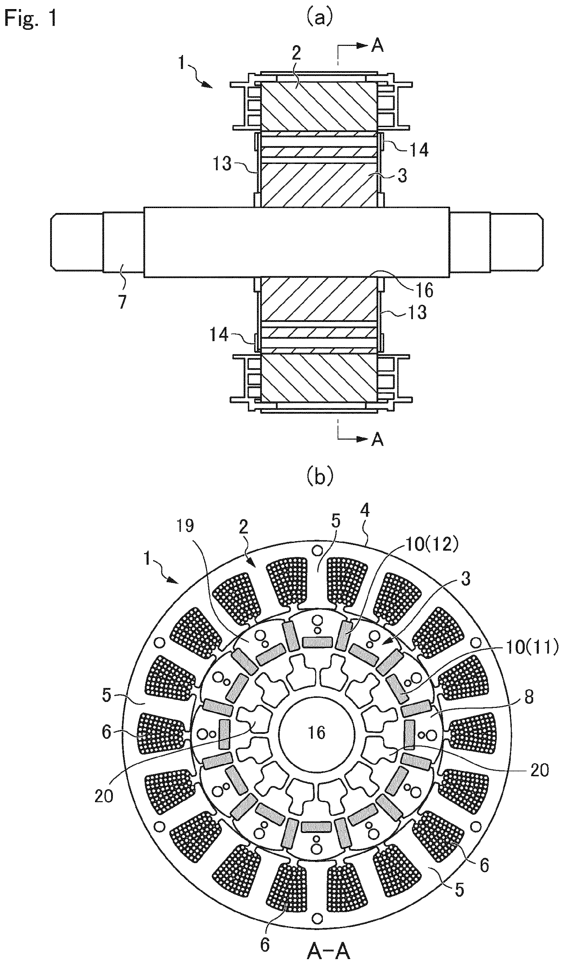

In Figs. 1A and 1B, an IPM motor 1 includes a stator 2 and a rotor 3.

The stator 2 includes a stator core 4 formed in a substantially cylindrical shape, a plurality (in the embodiment, 18) of teeth 5 which are radially formed inside the stator core 4, and windings 6 which are wound one around each of the teeth 5 and connected to a not-shown power source device. The windings 6 are configured so as, when supplied with electric current from the power source device, to generate rotating magnetic fields for causing the rotor 3 to rotate.

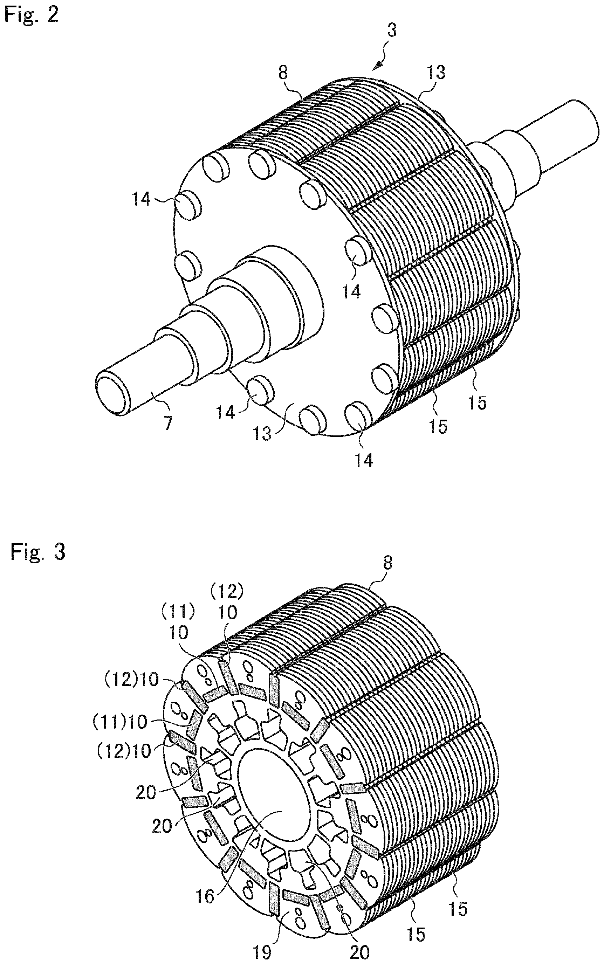

The rotor 3 is rotatably supported inside the stator 2. As also shown in Figs. 2 to 4, the rotor 3 has a rotor core 8 fixedly secured to a rotary shaft 7, a plurality of permanent magnets 10 circumferentially disposed in the rotor core, and end plates 13 attached one to either end of the rotor core 8, and the rotor core 8 and the end plates 13 are integrated by being axially fastened by rivets 14.

The rotor core 8 is configured in a cylindrical shape by laminating a plurality of discoid steel plates 15 formed of, for example, silicon steel. A shaft hole 16 into which to insert the rotary shaft 7 is formed in the center of the rotor core 8, and a magnet disposition region 19 in which are disposed the plurality of permanent magnets 10 is provided in an outer peripheral side region of the rotor core 8. Then, a plurality of main magnet holding portions 17, which are circumferentially spaced at predetermined intervals and are extended in the axial direction of the rotary shaft (shaft hole), and a plurality of auxiliary magnet holding portions 18, which are radially formed around the shaft hole 16, one between each adjacent pair of the main magnet holding portions, and are extended in the axial direction of the rotary shaft (shaft hole), are formed in the magnet disposition region 19.

The main magnet holding portions 17, as well as being extended parallel to the shaft hole, are disposed so that the long sides of the rectangular sections thereof are along the circumferential direction of the rotor core, and in this example, twelve main magnet holding portions 17 are circumferentially provided at regular intervals. Also, the auxiliary magnet holding portions 18, as well as being extended parallel to the shaft hole, are disposed so that the long sides of the rectangular sections thereof are along the radial direction of the rotor core, and are provided from the neighborhood of a line, which connects the main magnet holding portions 17 adjacent to each other, to the vicinity of the outer periphery of the rotor core 8, and twelve auxiliary magnet holding portions 18 are circumferentially provided at regular intervals. Consequently, the main magnet holding portions 17 are each provided in a position close to the radially inner ends of its adjacent auxiliary magnet holding portions 18.

Then, main magnets 11 formed into a rectangular parallelepiped which is of substantially the same shape as that of the main magnet holding portions 17 are fitted one in each of the main magnet holding portions 17, and also, auxiliary magnets 12 formed into a rectangular parallelepiped which is of substantially the same shape as that of the auxiliary magnet holding portions 18 are fitted one in each of the auxiliary magnet holding portions 18.

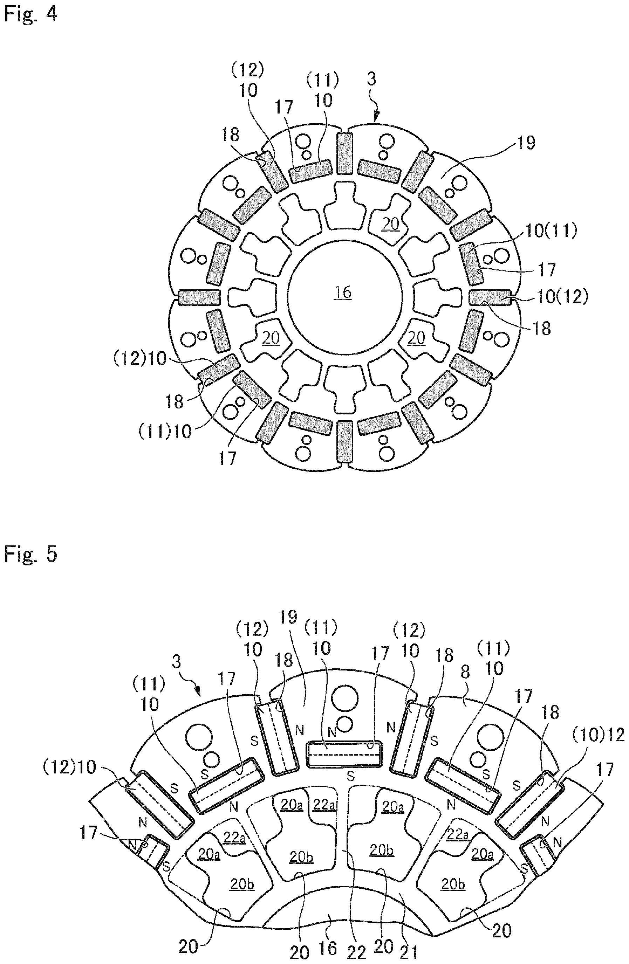

The main magnets 11 are fitted in so that the direction of the magnetic poles thereof conforms to the radial direction of the rotor core 8 and that the magnetic poles on the surface side of the rotor core 8 are circumferentially alternated (alternately reversed), as shown in Fig. 5. Also, the auxiliary magnets 12 are fitted in so that the direction of the magnetic poles thereof conforms to the circumferential direction and that the magnetic pole on the side of an auxiliary magnet 12, which is faced toward an adjacent main magnet 11, is the same as the magnetic pole of the adjacent main magnet 11 on the surface side of the rotor core 8.

Consequently, the main magnets 11 and the auxiliary magnets 12, being disposed in the direction of rotation of the rotor 3 by applying a Halbach array, are configured so as to generate magnetic fluxes mainly on the surface side of the rotor core 8.

Also, in the rotor core 8, a plurality of voids 20 extended parallel to the shaft hole 16 are provided between the magnet disposition region 19 and the shaft hole 16. Each of the voids 20, being disposed radially inside its respective auxiliary magnet holding portion 18, has a sectional shape which extends radially from the immediate vicinity of the auxiliary magnet holding portion 18 to close to the shaft hole 16. The circumferential width of the void 20 in the immediate vicinity of the auxiliary magnet holding portion 18 is formed to be substantially equal to the circumferential width of the auxiliary magnet holding portion 18, and the circumferential width of the void 20 close to the shaft hole 16 is formed to be larger than the circumferential width of the void 20 in the immediate vicinity of the auxiliary magnet holding portion 18. In this example, the circumferential width of the void 20 is formed so as to change radically in substantially the radial center of the void 20.

Consequently, connecting portions (spokes) 22 which extend radially from a hub portion 21 formed around the shaft hole 16 are each formed radially inside its respective main magnet holding portion 17 between adjacent voids, and the circumferential width of the connecting portion 22 in the vicinity of the main magnet holding portion 17 is formed to be larger than the circumferential width thereof in the vicinity of the shaft hole 16.

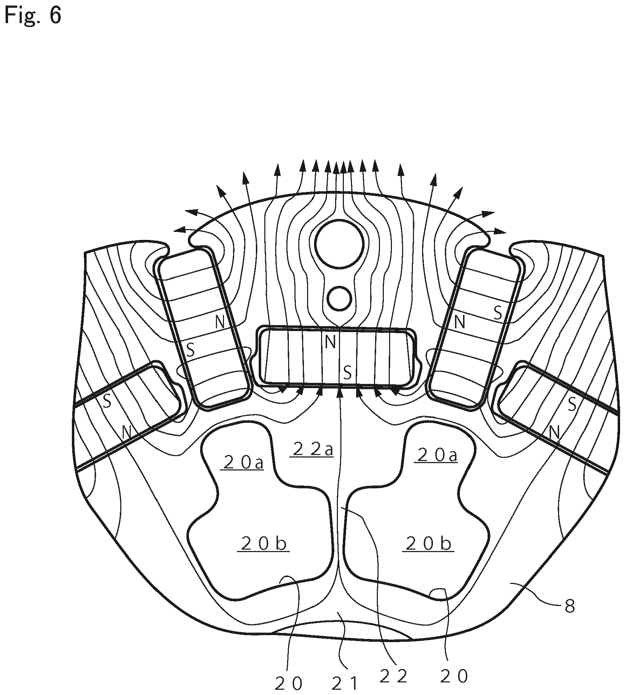

As heretofore described, as the main magnets 11 and the auxiliary magnets 12 are disposed by applying the Halbach array, a large number of magnetic fluxes are generated mainly on the surface side of the rotor 3. Assuming that no void 20 is provided, magnetic paths are formed even inside the main and auxiliary magnets 11 and 12 of the rotor core 8, so that quite a number of magnetic fluxes passing through the inside are also generated. However, the voids 20 are formed radially inside the respective auxiliary magnet holding portions 18, thus blocking the magnetic paths formed radially inside the main and auxiliary magnets 11 and 12, and it is possible, as shown in Fig. 6, to effectively reduce magnetic fluxes leaking radially inwardly of the main and auxiliary magnets 11 and 12. For this reason, it is possible, even when the diameter of the rotary shaft 7 is small (even when there is a distance between the permanent magnets 10 and the rotary shaft 7), to reduce magnetic fluxes leaking radially inwardly of the magnet array and thus improve magnetic properties.

In order to obtain the advantageous effect of blocking the magnetic paths, the voids 20 just have to be provided only in the vicinity of the respective auxiliary magnet holding portions 18, but in the heretofore described configuration, the voids 20 are extended in the radial direction, and the circumferential width of the voids 20 is increased in the vicinity of the shaft hole. Because of this, in this configuration, void portions small in circumferential width in the vicinity of the auxiliary magnet holding portions 18 function as magnetic path blockage portions 20a, and void portions closer to the shaft hole 16 and larger in circumferential width than the magnetic path blockage portions 20a function as weight reduction portions 20b which reduce the weight of the rotor 3.

The magnetic path blockage portions 20a, in the event of placing priority on the function to block magnetic fluxes leaking inwardly of the magnets, may be formed to be as wide as the weight reduction portions 20b, as shown by the dashed-dotted lines of Fig. 5.

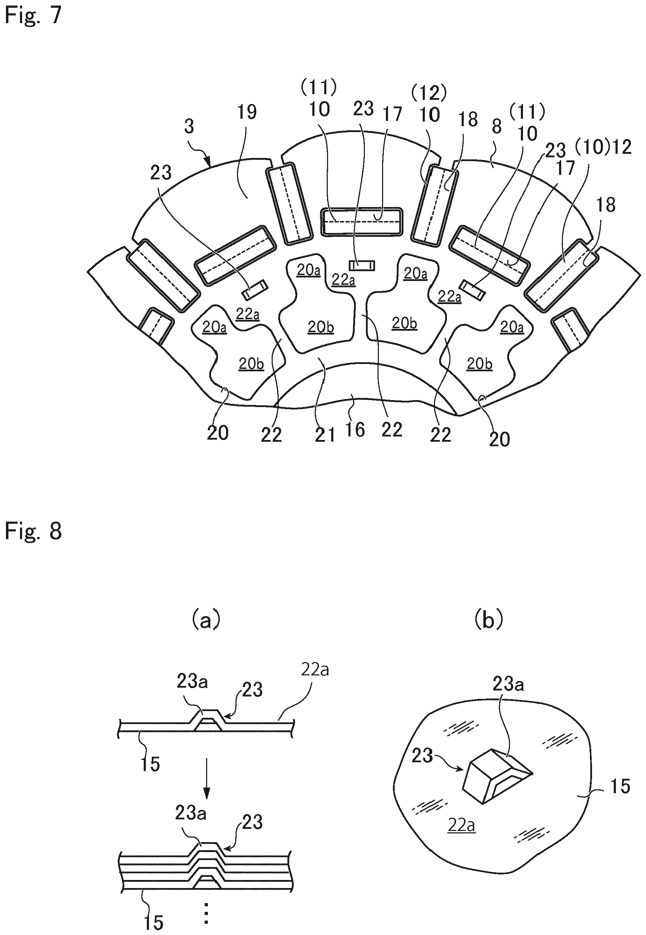

Also, in the heretofore described example, as a result of forming the magnetic path blockage portions 20a to be small in width, the portions of the connecting portions 22 in the vicinity of the main magnets are formed to be large in width. Therefore, a configuration may be such that caulked portions 23 wherein adjacent steel plates laminated are caulked together are formed by utilizing wide portions 22a of the connecting portions 22, as shown in Fig. 7.

For example, as shown in Figs. 8A and 8B, in order to dowel-caulk the steel plates 15, a configuration may be such as to form a dowel 23a integrally in the wide portion 22a of each of the steel plates 15 at the time of steel plate forming and connect adjacent steep plates together using the dowels 23a. In this kind of configuration, the caulked portions 23 are provided one in each portion low in magnetic flux density, so that there is little inconvenience of hindering magnetic flux flows. Also, there is no more need to connect the steel plates 15 with rivets, and the process of riveting the steel plates 15 together can be omitted, enabling a reduction in production man-hours and costs.

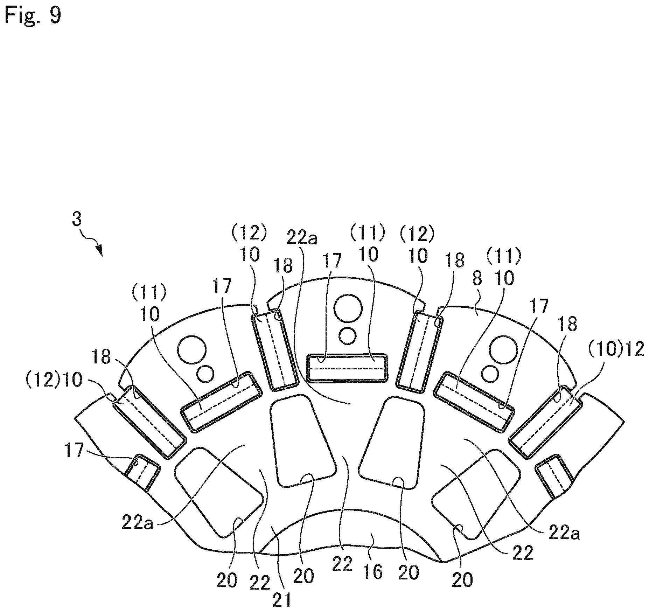

The shape of the wide portions 22a of the connecting portions 22 formed in the vicinity of the respective main magnet holding portions 17 and the shape of the voids 20 are not limited to those in the heretofore described embodiment, and as shown in Fig. 9, wide portions may be formed radially inside the respective main magnet holding portions by forming the voids 20 to be gradually wider toward the inside of the rotor core 8 and thereby forming the connecting portions 22 to be gradually wider toward the outside of the rotor core 8.

In this way, the shape of the voids 20 and the shape of the connecting portions 22, not being limited to the heretofore described shapes, may be appropriately changed within the range of not impairing the functions (magnetic path blockage function, weight reduction function, and caulked portion formation function) of the invention.

### Description of Reference Numerals and Signs

- 1:: IPM motor
- 3:: rotor
- 7:: rotary shaft
- 8:: rotor core
- 10:: permanent magnet
- 11:: main magnet
- 12:: auxiliary magnet
- 16:: shaft hole
- 17:: main magnet holding portion
- 18:: auxiliary magnet holding portion
- 19:: magnet disposition region
- 20:: void
- 20a:: magnetic path blockage portion
- 20b:: weight reduction portion
- 22:: connecting portion
- 22a:: wide portion

## Claims

1. A rotor (3) used for a motor (1) of inner rotor structure, including: a cylindrical rotor core (8); and a plurality of permanent magnets (10) disposed inside the rotor core (8), the rotor (3) being **characterized in that**
a shaft hole (16) is formed in the center of the rotor core (8) so as to penetrate through the rotor core (8), and a magnet disposition region (19) in which are disposed the plurality of permanent magnets (10) is provided in an outer peripheral side region of the rotor core (8), that
a plurality of main magnet holding portions (17), which are extended parallel to the shaft hole (16), and the long sides of the rectangular sections of which are disposed along the circumferential direction of the rotor core (8), and a plurality of auxiliary magnet holding portions (18), which are extended parallel to the shaft hole (16) and disposed one between each adjacent pair of the plurality of main magnet holding portions (17), and the long sides of the rectangular sections of which are disposed along the radial direction of the rotor core (8), are formed in the magnet disposition region (19) of the rotor core (8), that
the permanent magnets (10) include main magnets (11), which are fitted in the respective main magnet holding portions (17) so that the magnet pole direction of the main magnets (11) conforms to the radial direction of the rotor core (8), and auxiliary magnets (12) which are fitted in the respective auxiliary magnet holding portions (18) so that the magnet pole direction of the auxiliary magnets (12) conforms to the circumferential direction of the rotor core (8), and that
a plurality of voids (20) extended parallel to the shaft hole (16) are provided between the magnet disposition region (19) and the shaft hole (16), and the voids (20) are disposed radially inside the respective auxiliary magnet holding portions (18).

2. The rotor (3) according to claim 1, **characterized in that**
a circular hub portion (21) formed around the shaft hole (16) and the magnet disposition region (19) are connected by connecting portions (22) formed one between each adjacent pair of the voids (20), and the connecting portions (22) are provided radially inside the respective main magnet holding portions (17) .

3. The rotor (3) according to claim 1 or 2, **characterized in that**
the circumferential width of the connecting portions (22) in the vicinity of the respective main magnet holding portions (17) is made larger than the circumferential width thereof in the vicinity of the shaft hole (16).

4. The rotor (3) according to claim 3, **characterized in that**
the rotor core (8) is configured by laminating a large number of steel plates (15), and a caulked portion (23) wherein adjacent steel plates (15) are joined to each other is provided in a portion of each of the connecting portions (22) in the vicinity of each respective main magnet holding portion (17) .

5. The rotor (3) according to any one of claims 1 to 4, **characterized in that**
the voids (20) each have integrated therein a magnetic path blockage portion (20a), which is provided in the vicinity of its respective auxiliary magnet holding portion (18) and to which the function to block magnetic paths is imparted, and a weight reduction portion (20b) which is provided, continuous with the magnetic path blockage portion (20a), on the shaft hole (16) side and to which a weight reduction function is imparted.

6. An IPM motor (1), including:
a cylindrical stator (2) having a stator core (4), which has a plurality of teeth (5), and windings (6) wound one around each of the plurality of teeth (5); and the rotor (3) according to any one of claims 1 to 5 which is provided inside the stator (2) .
